# EUROPEAN PATENT APPLICATION

(11) **EP 1 359 575 A2**
(43) Date of publication of application: **05.11.2003**
(21) Application number: 03007530.3
(22) Date of filing: 01.04.2003
(51) Int. Cl.: G11B 7/24

(54) **Optical recordable medium and process of recording thereon**

(30) Priority: 09.04.2002 CN 02106044
(71) Applicant: Lanyo Technology Co., Ltd., Taoyuan 330, Taiwan, R.O.C. (TW)
(72) Inventor: Chang, Yu-Chia, Taoyuan 330, Taiwan, R.O.C. (TW); Cheng, Chu-Hsuan, Taoyuan 330, Taiwan, R.O.C. (TW); Lai, Hsin-Cheng, Taoyuan 330, Taiwan, R.O.C. (TW)
(74) Representative: Viering, Jentschura & Partner

(57) **Abstract**

An optical recordable medium at least comprises a recording layer formed on a transparent substrate. The recording layer is sequentially formed on a first transparent layer, a semi-reflective layer, a dielectric layer, a reflective layer and a material layer. When a modulated writing beam irradiates the recording layer and data is written in a recorded area, the first transparent layer and the semi-reflective layer react to form a second semi-reflective layer. When a reading light irradiates the recorded area, the light wave phase is shifted and the recorded area becomes anti-reflective.

## Description

### BACKGROUND OF THE INVENTION

### Field of Invention

The present invention relates to an optical recordable medium and a process of recording on the same. More particularly, the present invention relates to a recordable disc made from inorganic material, which is adapted to record data by an optical method.

### Description of Related Art

A recordable disc has many advantages, such as high storage capacity, easy conservation, low cost and so on. Therefore, the recordable disc is gradually replacing the traditional magnetic storage medium and is becoming an indispensable storage medium for modem people. Traditionally, an organic dye is used to form a recording layer of the recordable disc. When a light beam with a specific wavelength irradiates the organic dye, the organic dye absorbs the light and then changes (vary) its property or structures. Therefore, the light beam having a specific wavelength can be used to write data onto the recordable disc. Since the environment is full of light with various wavelengths, especially the sunlight, the organic dye of the recording layer can easily absorb the light with the specific wavelength to slowly decay its property or structure. Consequently, the lifetime of the recordable disc is limited.

Besides, the large molecular size of the organic dye in the recording layer causes additional problems. One is that the groove and space of a future high-density recording media is going to be narrower, hence it's hard to accommodate an organic dye with a large molecular size by spin coating. Furthermore, the higher recording density requires a higher recording speed for a future high-density recording media. However, it is difficult to unite the higher recording speed and the long time stability requirements of the organic dye.

A data is written into an inorganic recording layer of a recordable medium by absorbing the energy of the light beam, and a optical state change of the inorganic recording layer occurs. For example, an ablation recordable disc is disclosed in USP 4,451,914 and USP 4,451,915. In the ablation recordable disk, a hole is formed on a reflective recording layer by a laser beam. Moreover, alloying of a bi-layer is disclosed in USP 4,499,178, in which an alloy layer is formed from two different metal-containing layers by a laser beam. Hence, the reflectivity of the recording layer is reversed. Furthermore, discontinuous metal films as an active layer in an ablative optical structure is disclosed in USP 5188923. in which a data is recorded by directing a focused energy to heat the discontinuous metal films to change the reflectivity of the active layer. The active layer is anti-reflective before writing and becomes strongly reflective after writing.

The disadvantage of the ablation recordable disc disclosed in USP 4,451,914 and USP 4,451,915 is that the material ablated by laser beam piles up around the hole. The recording layer is a reflective layer and the ablated hole is an anti-reflective position. The material piled around the hole scatters the reading light beam and thus errors occur.

The power used to form the alloy layer by two different metal containing layers in USP 4,499,178 is between 200 milliwatts and 400 milliwatts. It is impossible for a general commercial CD-R/RW driver or DVD-R/RW driver to provide such a large power. Other traditional materials for fabricating the recordable medium are not suitable to be used in such a high-power writing mode, neither.

Although the discontinuous metal films as the active layer in an ablative optical structure disclosed in USP 5188923 can be written in a low power mode, the reflectivity changing mode of the active layer that is anti-reflective before writing and becomes strongly reflective after writing is a disadvantage. Traditionally, the active (recording) layer is strongly reflective before writing data. If any defect exists on the disc as the disc is fabricated, it can be easily detected by any anti-reflective zone occurring. The active layer disclosed in USP 5188923 is anti-reflective, so it will be very difficult to detect any defects on the disc.

### SUMMARY OF THE INVENTION

The disadvantages described above can't be overcome simultaneously for above independent cases. Therefore, the purpose of the optical recordable medium and a process of recording on the same disclosed in the present invention are to overcome the above disadvantages at the same time.

Because the recordable disc made from inorganic material has the disadvantages described above, therefore, the present invention provides an optical recordable medium and a process of recording on the same. The optical recordable medium comprises a general optical thin film material fitting with a newly designed film to solve the problems mentioned above and to achieve the purpose, recording once.

It is therefore an objective of the present invention to provide an optical recordable medium and a process of recording on the same, wherein data can be written onto the medium with a low writing power.

It is another an objective of the present invention to provide an optical recordable medium and a process of recording on the same, which meets the requirements of the specifications of current CD formats or DVD formats and that of a higher density recordable media in the future.

It is still another an objective of the present invention to provide an optical recordable medium and a process of recording on the same, which can have high reflectivity, low writing power, high signal modulation, and the same modulation polarity as the commercial optical discs.

In accordance with the foregoing and other objectives of the present invention, the present invention provides an optical recordable medium and a process of recording on the same. An optical recordable medium at least comprises a recording layer. The recording layer is formed on a transparent substrate. The recording layer sequentially comprises a transparent layer, a first semi-reflective layer, a dielectric layer, a reflective layer and a material layer from bottom to the top.

When a modulated writing beam irradiates the recording layer and data is written in a recorded area, the transparent layer and the first semi-reflective layer react to form a second semi-reflective layer. When a reading light irradiates the recorded area, the light wave phase shift from its initial state and the recorded area becomes an anti-reflective state.

The theory applied to the present invention is that the transmittance (reflectivity) of a light beam depends on the thickness of a material layer. While a modulated writing beam irradiates the recording layer and data is written in a recorded area, the transparent layer and the first semi-reflective layer react to form a second semi-reflective layer. When a reading light beam irradiates the unrecorded area, the reflective layer, the first semi-reflective layer, and the transparent layer reflect the light beam. However, when the reading light beam irradiates the recorded area, the light beam is only reflected by the reflective layer and the second semi-reflective layer. The total thickness of the second semi-reflective layer and the dielectric layer shift the phase of the reflected reading light beam, hence the reflectivity of the recorded area is changed.

In order to improve the thermal conducting character of the recording layer and to decrease the misjudgment of the recorded marks on the recording layer, a dielectric layer can be formed prior to the transparent layer to enhance the modulation of thermal profile of the recording layer.

Furthermore, for the purpose of increasing the reflectivity of the recording layer, a semi-reflective layer can be formed prior to the transparent layer.

Additionally, a transparent layer can also be formed between the dielectric layer and the semi-reflective layer to improve the thermal conducting character of the recording layer and to decrease the misjudgment of the recorded marks on the recording layer.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the preferred embodiment, with reference made to the accompanying drawings as follows:

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a schematic, cross-sectional diagram showing the optical recordable medium disclosed in first, second and third embodiments of the present invention;
Fig. 2 is a schematic, cross-sectional diagram showing the recorded optical recordable medium disclosed in the present invention;
Fig. 3 is a schematic, cross-sectional diagram showing the recorded optical recordable medium according to a fourth preferred embodiment of this invention;
Fig. 4 is a schematic, cross-sectional diagram showing the recorded optical recordable medium according to a fifth preferred embodiment of this invention; and
Fig. 5 is a schematic, cross-sectional diagram showing the recorded optical recordable medium according to a sixth preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

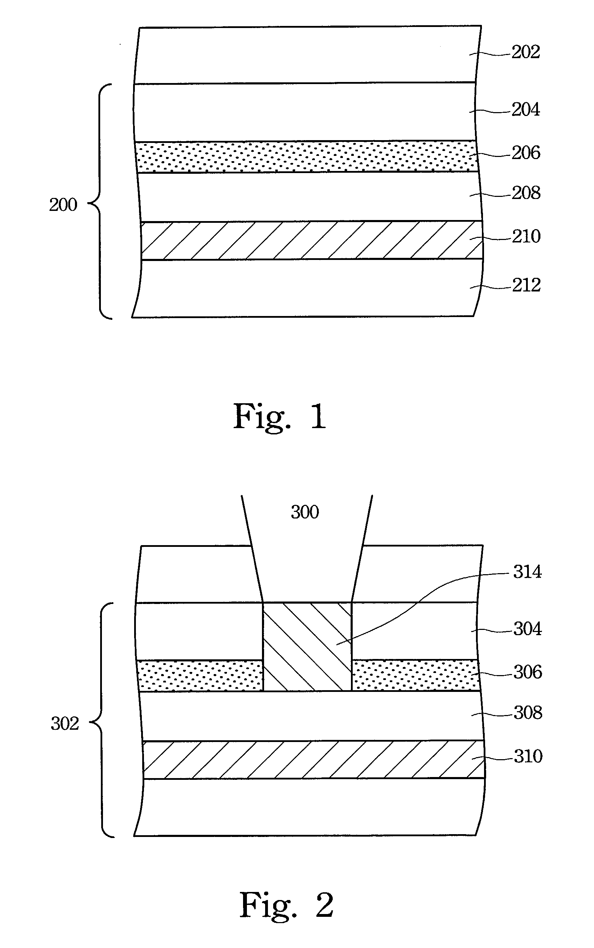

Reference is made to figure 1. Figure 1 is a schematic, cross-sectional diagram showing the optical recordable medium disclosed in the present invention. An optical recordable medium at least comprises a recording layer 200. The recording layer 200 is formed on a transparent substrate 202. The recording layer 200 sequentially comprises a transparent layer 204, a semi-reflective layer 206, a dielectric layer 208, a reflective layer 210 and a material layer 212. The material used to form the transparent layer 204 comprises metal alloy, semi-conductive material, metal phosphine and metal arsenide. Specially, the material of the transparent layer 204 is silicon, germanium, germanium phosphine, indium phosphine, gallium arsenide, indium arsenide, bismuth gallium alloy, bismuth indium alloy or a combination thereof. The thickness of the transparent layer 204 is between about 1 nm and 200 nm.

The material used to form the semi-reflective layer 206 is metal or metal alloy. Specially, the material of the semi-reflective layer 206 is silver, aluminum, gold, chromium, copper, indium, iridium, nickel, platinum, rhenium, rhodium, tin, tantalum, tungsten or a combination thereof. The thickness of the semi-reflective layer 206 is between about 5 nm and 100 nm. The material used to form the reflective layer 210 is also metal or metal alloy. Specially, the material of the reflective layer 210 is silver, aluminum, gold, chromium, copper, indium, iridium, nickel, platinum, rhenium, rhodium, tin, tantalum, tungsten or a combination thereof. The thickness of the reflective layer 210 is between about 1 nm and 300 nm.

Additionally, the material used to form the dielectric layer 208 is an oxide or a sulfide of zinc, aluminum, indium, tin, titanium, magnesium, silicon, tantalum, tungsten or a combination thereof. Moreover, the material used to form the dielectric layer 208 further comprises an organic dielectric material. The thickness of the dielectric layer 208 is between about 1 nm and 300 nm. The material layer 212 is a protective layer to protect other material layers. The material layer 212 also can be a transparent layer for binding.

Reference is made to figure 2. Figure 2 is schematic, cross-sectional diagram showing a recorded optical recordable medium disclosed in the present invention. When a modulated writing beam 300 irradiates the recording layer 302 and data is written in a recorded area, the transparent layer 304 and the semi-reflective layer 306 react to form a semi-reflective layer 314. When a reading light irradiates the recorded area, the light wave phase will shift and the recorded area becomes an anti-reflective state.

The writing power used to write data in the optical recordable medium provided by the present invention is between about 5 milliwatts and 30 milliwatts. The magnitude of the writing power depends on the thickness of the designed material layer. The reflectivity of the recording layer is between about 0.2 and 0.65, and the largest variation of the reflectivity between before writing and after writing is sixty percent. The carrier-noise ratio (CNR) of the recordable medium is higher than 40 dB, generally speaking, the CNR value is 60 dB.

The theory applied to the present invention is that the transmittance (reflectivity) of a light beam depends on the thickness of a material layer. While a modulated writing beam 300 irradiates the recording layer 302 and data is written in a recorded area, the transparent layer 304 and the semi-reflective layer 306 react to form a semi-reflective layer 314. When a reading light beam irradiates the unrecorded area, the reflective layer 310, the semi-reflective layer 314, and the transparent layer 304 reflect the light beam. However, when the reading light beam irradiates the recorded area, the light beam is only reflected by the reflective layer 310 and the semi-reflective layer 314. The total thickness of the semi-reflective layer 314 and the dielectric layer 308 shift the phase of the reading light beam, hence the reflectivity of the recorded area is changed.

In order to improve the thermal conducting character of the recording layer and to decrease the misjudgment of the recorded marks on the recording layer, a dielectric layer can be formed prior to the transparent layer 304 to enhance the modulation of the thermal profile of the recording layer.

Furthermore, for the purpose of increasing the reflectivity of the recording layer, a semi-reflective layer can be formed prior to the transparent layer 304.

Additionally, a transparent layer can also be formed between the dielectric layer 308 and the semi-reflective layer 306 to improve the thermal conducting character of the recording layer and to decrease the misjudgment of the recorded marks on the recording layer.

The thickness of the material layer disclosed in the present invention depends on requirement. Because the feature of the present invention is that the total thickness of the semi-reflective layer and the dielectric layer shifts the phase of the reading light beam and the reflectivity of the recorded area is changed, therefore, the thickness of all material layers disclosed above-mention is just an exemplification, for example, the thickness of the material layers in the recording layer is changed and the recording layer becomes anti-reflective prior to writing. The thickness of partial material layer maybe beyond the range disclosed forgoing. The writing power will be lower than about 1 milliwatt in this mode.

### Embodiment 1

Reference is made to figure 1. The optical recordable medium at least comprises a recording layer 200. The recording layer 200 is formed on a transparent substrate 202. The recording layer 200 sequentially comprises a transparent layer 204, a semi-reflective layer 206, a dielectric layer 208, a reflective layer 210 and a material layer 212. The transparent substrate 202 is a polycarbonate (PC) substrate having a thickness of about 1.2 mm. The transparent layer 204 is a silicon thin layer. The thickness of the transparent layer 204 is between about 10 nm and 100 nm. The semi-reflective layer 206 is a thin gold layer. The thickness of the semi-reflective layer 206 is between about 7 nm and 30 nm. The dielectric layer 208 is a ZnS-SiO2 complex thin layer. The thickness of the dielectric layer 208 is between about 10 nm and 150 nm. The reflective layer 210 is aluminum thin layer. The thickness of the reflective layer 210 is between about 10 nm and 100 nm. The material layer 212 is a protective layer.

The optical recordable medium is tested with a 4× writing speed on a dynamic tester inside which is a commercial CD-R/RW drive with a 780 nm read/write wavelength. The optimum writing power is between about 14 milliwatts and 20 milliwatts. The test result is that the reflectivity of the recording layer is between about 0.2 and 0.65, and the largest variation of the reflectivity between before writing and after writing is about sixty percent. The carrier-noise ratio (CNR) of the recordable medium is higher than about 45 dB.

### Embodiment 2

Reference is made to figure 1. The optical recordable medium at least comprises a recording layer 200. The recording layer 200 is formed on a transparent substrate 202. The recording layer 200 sequentially comprises a transparent layer 204, a semi-reflective layer 206, a dielectric layer 208, a reflective layer 210 and a material layer 212. The transparent substrate 202 is a polycarbonate (PC) substrate having a thickness of about 0.6 mm. The transparent layer 204 is a silicon thin layer. The thickness of the transparent layer 204 is between about 10 nm and 100 nm. The semi-reflective layer 206 is a gold thin layer. The thickness of the semi-reflective layer 206 is between about 7 nm and 30 nm. The dielectric layer 208 is a ZnS-SiO2 complex thin layer. The dielectric layer 208 also could be an organic dielectric material. The thickness of the dielectric layer 208 is between about 10 nm and 150 nm. The reflective layer 210 is gold thin layer. The thickness of the reflective layer 210 is between about 10 nm and 100 nm. The material layer 212 is also a polycarbonate (PC) substrate having 0.6 mm thickness.

The optical recordable medium is tested with a 1× writing speed on a dynamic tester Pulsetech DDU-1000 with a 650 nm read/write wavelength. The optimum writing power is between about 11 milliwatts and 20 milliwatts. The test result is that the reflectivity of the recording layer is between about 0.2 and 0.65, and the largest variation of the reflectivity between before writing and after writing is about sixty percent. The carrier-noise ratio (CNR) of the recordable medium is higher than about 60 dB.

### Embodiment 3

Reference is made to figure 1. The optical recordable medium at least comprises a recording layer 200. The recording layer 200 is formed on a transparent substrate 202. The recording layer 200 sequentially comprises a transparent layer 204, a semi-reflective layer 206, a dielectric layer 208, a reflective layer 210 and a material layer 212. The transparent substrate 202 is a polycarbonate (PC) substrate having 1.2 mm thickness. The transparent layer 204 is a silicon thin layer. The thickness of the transparent layer 204 is between about 10 nm and 100 nm. The semi-reflective layer 206 is a gold thin layer. The thickness of the semi-reflective layer 206 is between about 7 nm and 30 nm. The dielectric layer 208 is a ZnS-SiO2 complex thin layer. The thickness of the dielectric layer 208 is between about 10 nm and 150 nm. The reflective layer 210 is also metal or metal alloy. Specially, the material of the reflective layer 210 is silver, aluminum, gold, copper, or combinations thereof. The thickness of the reflective layer 210 is between about 10 nm and 100 nm. The material layer 212 is a protective layer.

The optical recordable medium is tested with a 4× writing speed on a dynamic tester inside which is a commercial CD-R/RW drive with a 780 nm read/write wavelength. The optimum writing power is between about 11 milliwatts and 20 milliwatts. The test result is that the reflectivity of the recording layer is between about 0.2 and 0.65, and the largest variation of the reflectivity between before writing and after writing is about sixty percent. The carrier-noise ratio (CNR) of the recordable medium is higher than about 45 dB, and the highest value is about 64 dB.

### Embodiment 4

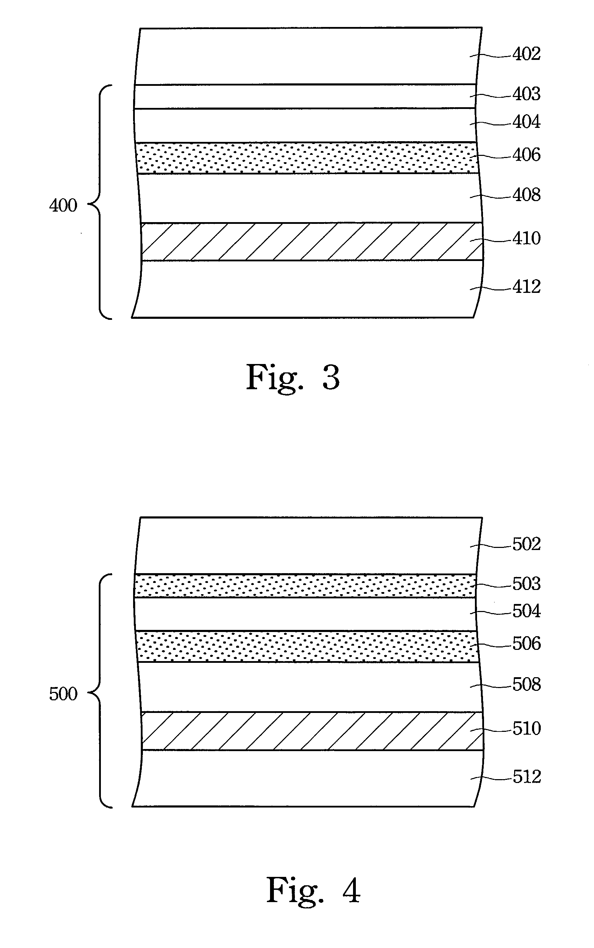

Reference is made to figure 3. The optical recordable medium at least comprises a recording layer 400. The recording layer 400 is formed on a transparent substrate 402. The recording layer 400 sequentially comprises a dielectric layer 403, a transparent layer 404, a semi-reflective layer 406, a dielectric layer 408, a reflective layer 410 and a material layer 412. The transparent substrate 402 is a polycarbonate (PC) substrate having a thickness of about 0.6 mm. The transparent layer 404 is a silicon thin layer. The thickness of the transparent layer 404 is between about 10 nm and 100 nm. The semi-reflective layer 406 is a gold thin layer. The thickness of the semi-reflective layer 406 is between about 7 nm and 30 nm. The dielectric layer 408 is a ZnS-SiO2 complex thin layer. The dielectric layer 408 also could be an organic dielectric material. The thickness of the dielectric layer 408 is between about 10 nm and 150 nm. The reflective layer 410 is gold thin layer. The thickness of the reflective layer 410 is between about 10 nm and 100 nm. The material layer 412 is also a polycarbonate (PC) substrate having a thickness of about 0.6 mm.

The material of the dielectric layer 403 is same as the material of the dielectric layer 408 but the thickness is between about 5 nm and 200 nm. The purpose of the dielectric layer 403 is to improve the thermal conductingcharacter of the recording layer and to decrease the misjudgment of the recorded marks on the recording layer.

The optical recordable medium is tested with a 1× writing speed on a dynamic tester Pulsetech DDU-1000 with a 650 nm read/write wavelength. The optimum writing power is between about 11 milliwatts and 20 milliwatts. The test result is that the reflectivity of the recording layer is between about 0.2 and 0.65, and the largest variation of the reflectivity between before writing and after writing is about sixty percent. Compared with the character of the optical recordable medium described in embodiment 2, the jitter of the recorded marks decreases by about 0.5-2%.

### Embodiment 5

Reference is made to figure 4. The optical recordable medium at least comprises a recording layer 500. The recording layer 500 is formed on a transparent substrate 502. The recording layer 500 sequentially comprises a semi-reflective layer 503, a transparent layer 504, a semi-reflective layer 506, a dielectric layer 508, a reflective layer 510 and a material layer 512. The transparent substrate 502 is a polycarbonate (PC) substrate having a thickness of about 0.6 mm. The transparent layer 504 is a silicon thin layer. The thickness of the transparent layer 504 is between about 10 nm and 100 nm. The semi-reflective layer 506 is a gold thin layer. The thickness of the semi-reflective layer 506 is between about 7 nm and 30 nm. The dielectric layer 508 is a ZnS-SiO2 complex thin layer. The dielectric layer 508 also could be an organic dielectric material. The thickness of the dielectric layer 508 is between about 10 nm and 150 nm. The reflective layer 510 is gold thin layer. The thickness of the reflective layer 510 is between about 10 nm and 100 nm. The material layer 512 is also a polycarbonate (PC) substrate having 0.6 mm thickness.

The material of the semi-reflective layer 503 is the same as the material of the semi-reflective layer 506 but the thickness is between about 5 nm and 100 nm. The purpose of the dielectric layer 503 is to increase the reflectivity of the recording layer and to improve the thermal conducting character of the recording layer.

The optical recordable medium is tested with a 1× writing speed on a dynamic tester Pulsetech DDU-1000 with a 650 nm read/write wavelength. The optimum writing power is between about 11 milliwatts and 20 milliwatts. The test result is that the reflectivity of the recording layer is between about 0.2 and 0.65, and the largest variation of the reflectivity between before writing and after writing is about sixty percent. Compared with the character of the optical recordable medium described in embodiment 2, the reflectivity of the recording layer increases by about 3-10%.

### Embodiment 6

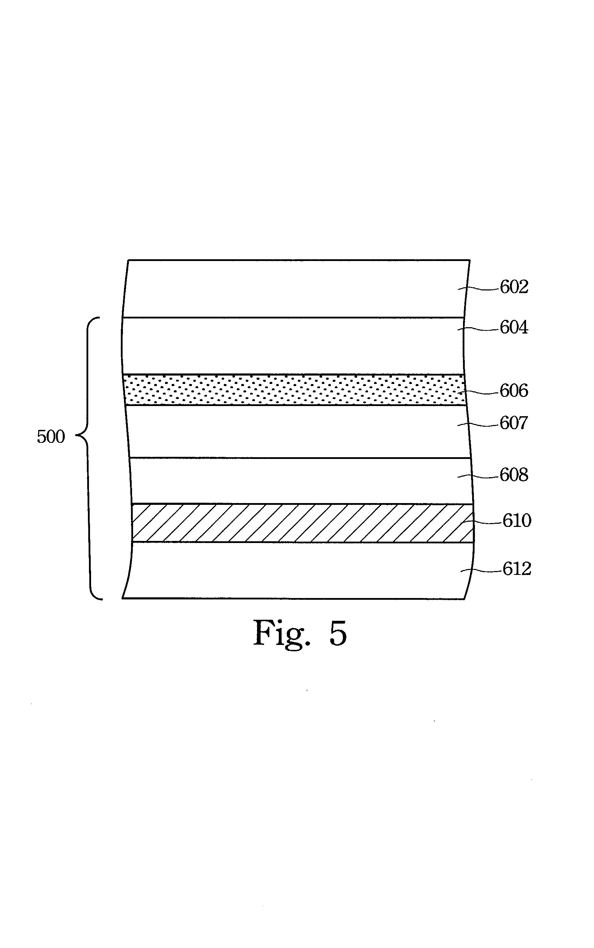

Reference is made to figure 5. The optical recordable medium at least comprises a recording layer 600. The recording layer 600 is formed on a transparent substrate 602. The recording layer 600 sequentially comprises a transparent layer 604, a semi-reflective layer 606, a transparent layer 607, a dielectric layer 608, a reflective layer 610 and a material layer 612. The transparent substrate 602 is a polycarbonate (PC) substrate having a thickness of about 0.6 mm. The transparent layer 604 is a silicon thin layer. The thickness of the transparent layer 604 is between about 10 nm and 100 nm. The semi-reflective layer 606 is a gold thin layer. The thickness of the semi-reflective layer 606 is between about 7 nm and 30 nm. The dielectric layer 608 is a ZnS-SiO2 complex thin layer. The dielectric layer 608 also could be an organic dielectric material. The thickness of the dielectric layer 608 is between about 10 nm and 150 nm. The reflective layer 610 is gold thin layer. The thickness of the reflective layer 610 is between about 10 nm and 100 nm. The material layer 612 is also a polycarbonate (PC) substrate having a thickness of about 0.6 mm.

The material of the transparent layer 607 is same as the material of the transparent layer 604 but the thickness is between about 5 nm and 50 nm. The purpose of the transparent layer 607 is to improve the thermal conductingcharacter of the recording layer and to decrease the misjudgment of the recorded marks on the recording layer.

The optical recordable medium is tested with a 1× writing speed on a dynamic tester Pulsetech DDU-1000 with a 650 nm read/write wavelength. The optimum writing power is between about 11 milliwatts and 20 milliwatts. The test result is that the reflectivity of the recording layer is between about 0.2 and 0.65, and the largest variation of the reflectivity between before writing and after writing is about sixty percent. Compared with the character of the optical recordable medium described in embodiment 2, the jitter of the recorded position decreases by about 0.5-2%.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An optical recordable medium at least comprising a recording layer formed on a transparent substrate, the recording layer at least sequentially comprising:
a first transparent layer;
a first semi-reflective layer;
a first dielectric layer;
a reflective layer; and
a material layer;
wherein when a modulated writing beam irradiates the recording layer, the first transparent layer and the first semi-reflective layer react to form a second semi-reflective layer, and a reflective character of the recording layer is reversed.

2. The optical recordable medium of claim 1, wherein a material of the first transparent layer is selected from a group consisting of silicon, germanium, germanium phosphine, indium phosphine, gallium arsenide, indium arsenide, bismuth gallium alloy, bismuth indium alloy and a combination thereof.

3. The optical recordable medium of claim 1, wherein a thickness of the first transparent layer is between about 1 nm and 200 nm.

4. The optical recordable medium of claim 1, wherein a material of the first semi-reflective layer is selected from a group consisting of silver, aluminum, gold, chromium, copper, indium, iridium, nickel, platinum, rhenium, rhodium, tin, tantalum, tungsten and a combination thereof.

5. The optical recordable medium of claim 1, wherein a thickness of the first semi-reflective layer is between about 5 nm and 100 nm.

6. The optical recordable medium of claim 1, wherein a material of the reflective layer is selected from a group consisting of silver, aluminum, gold, chromium, copper, indium, iridium, nickel, platinum, rhenium, rhodium, tin, tantalum, tungsten and a combination thereof.

7. The optical recordable medium of claim 1, wherein a material of the first dielectric layer is selected from a group consisting of an oxide or a sulfide of zinc, aluminum, indium, tin, titanium, magnesium, silicon, tantalum, tungsten and a combination thereof.

8. The optical recordable medium of claim 1, wherein a material of the first dielectric layer further comprises an organic dielectric material.

9. The optical recordable medium of claim 1, wherein a thickness of the first dielectric layer is between about 1 nm and 300 nm.

10. The optical recordable medium of claim 1, wherein the reversed reflective character of the recording layer dues to a second semi-reflective layer is formed and a wave phase of reading light shifts.

11. The optical recordable medium of claim 1, wherein the material layer is a protective layer or a second transparent substrate.

12. The optical recordable medium of claim 1, wherein a second dielectric layer is formed prior to the first transparent layer, and a thickness of the second dielectric layer is between about 5 nm and 200 nm.

13. The optical recordable medium of claim 1, wherein a third semi-reflective layer is formed prior to the first transparent layer, and a thickness of the second dielectric layer is between about 5 nm and 100 nm.

14. The optical recordable medium of claim 1, wherein a second transparent layer is formed prior to the first dielectric layer, and a thickness of the second transparent layer is between about 5 nm and 50 nm.
